# EUROPEAN PATENT APPLICATION

(11) **EP 3 249 312 A1**
(43) Date of publication of application: **29.11.2017**
(21) Application number: 16290092.2
(22) Date of filing: 27.05.2016
(51) Int. Cl.: F24F 13/02, F16L 59/14, F16L 9/00, F16L 9/22

(54) **DUCTS**

(71) Applicant: PROMAT SAS, 78540 Vernouillet (FR)
(72) Inventor: Venkov, Vesselin, 78630 Orgeval (FR)
(74) Representative: Van Steenlandt, Wim August Maria

(57) **Abstract**

A duct having a four sided substantially closed cross section is provided. the duct is mount to one of more construction walls, one or two sides of the duct contacting the one or more construction walls, each side of the cross section being provided by a calcium silicate board. A first group of boards contacting the one or more construction walls by a face of said boards having a board thickness T1 A second group of boards have faces not contacting said one or more construction walls, and having a board thickness T2. T1 is smaller than T2, T1 being more than or equal to 20mm. At the interfaces where a board of the first group of boards is connected to a board of the second group of boards, a side of the board of the first group of boards adheres at least by means of a glue to the face of the board of said second group of boards, which face is facing inwards the duct.

## Description

### Field of the invention

The present invention relates to ducts, in particularly fire rated ducts, and methods to provide such ducts

### Background of the invention

Providing buildings, public as well as private, which meet the requirements of fire resistance is essential in our ever evolving society. One of the criteria to be met is the provision of ducts to evacuate hot gasses from fire incidents, and conduct these gasses trough unaffected rooms or parts of the building to the outer side of this building, or bring fresh air from the outer side of the building, through rooms with fire, to unaffected rooms.

Such fire rated ductwork, typically rectangular ductwork, is subjected to severe tests before being allowed to install.

As a matter of caution, such ductwork is always installed as a four sided duct, having four identical sides, and which do not contact nay of the construction walls of the building. This ductwork is - so to say - hung within the building using structural support. In some buildings, this may cause some space (the space between ductwork and construction wall) may be considered lost for use.

One always have been rather reluctant to mount the fire rated ductwork directly to the construction wall, i.e. in physical contact along one or more sides of the duct. When such constructions were made, again a ductwork with four identical sides were typically used. There is a strong conviction that four identical sides, optionally even having reinforcing systems and structures in the corners of the duct, formed by at least one side of the duct contacting the construction wall, is needed to meet the severe tests for passing the criteria of allowance.

### Summary of the invention

It is an object of the present invention to provide a duct being part of a fire rated ductwork, which passes the allowance criteria, such as defined such as by test standard EN 1366-1 and EN 1366-8, and classification standard EN 13501-3

It was surprisingly found that, against ruling conviction, ductwork which meets the criteria as set forth in claim 1, pass such test for allowance.

According to a first aspect of the invention, a duct is provided. The duct has a four sided substantially closed cross section, said duct being mount to one of more construction walls, one or two sides of said duct contacting said one or more construction walls, each side of said cross section being provided by a calcium silicate board, a first group of boards contacting said one or more construction walls by a face of said boards, the boards of this first group of boards having a board thickness T1, a second group of boards have faces not contacting said one or more construction walls, the boards of this second group of boards having a board thickness T2, T1 being smaller than T2, T1 being more than or equal to 20mm, at the interfaces where a board of said first group of boards is connected to a board of said second group of boards, a side of said board of said first group of boards adheres at least by means of a glue to the face of the board of said second group of boards, which face is facing inwards the duct.

The advantage of this combination of criteria is that a duct is provided which is fire rate. The duct saves space as the sides contacting the construction walls are of less thickness, but still allow the duct to pass the fire rate tests. This also thanks to the way the interfaces between sides contacting the construction wall with one of its faces, and the sides not contacting a construction wall with one of its faces is implemented.

The duct according to the invention is preferably fire rated, meaning that the duct has been tested according to standard EN1366-1, and has a classification according to standard EN 13501-3. Optionally the duct may pass EN 1366-8. The duct is substantially air tight, as air leaks measurements are done while testing according to aforementioned standard 1366-1. Optionally, the duct may have been tested according to standard EN 13403 and have a classification according to standard EN 1507.
A board is defined by two opposite faces, and four sides which encompass the two faces. The board thickness means the average distance between the two faces of the board.

The glue (also referred to as adhesive) must be sufficiently fire resistant such to that the duct is fire rated according to the aforementioned standards.
The glue is provided between the side of one board and the face of the other board such that an air tight seal is provided between the side and the face. Care is taken that little to no glue is present in the corners defined by the two boards, or long the faces of the boards oriented inwards to the inner side of the duct. The term interface means the area where two surfaces, either faces or sides of boards, are coupled to each other.

The boards contacting one or more construction walls may be anchored to these walls by any appropriate means such as screws, bolts and alike.

The boards are calcium silicate boards. Such boards are known in the art. A calcium silicate board comprises as one of the main components calcium silicate (such as xonotlite), and typically other materials such as cement, reinforcing fibers ( e.g. cellulose fibers, glass fibers and alike). Useful calcium silicate boards are e.g. Promatect L500 and Promatect LS boards, available from Promat S.A.S. According to some embodiments, T1 may be more than or equal to 25mm. Preferably T1 is in the range of 25 to 40 mm, such as in the range of 25 to 35mm, inclusive.

According to some embodiments, the adhesive or glue is only present in the duct at the interfaces of the boards. The adhesive or glue may be sufficiently fire resistant such to that the duct is fire rated according to the aforementioned standards.

According to some embodiments, only one side of the duct may contact one or more construction walls.

According to some embodiments, two sides of the duct may contacting one or more construction walls. According to some embodiments, one or more additional calcium silicate support beams may be provided at the interface between two boards of said first group of boards.

According to some embodiments, one or more additional calcium silicate support beams may be provided along the interface between the boards of said first group of boards and the boards of said second group of boards

Additionally, one or more additional calcium silicate support beams may be provided along the interface between the boards of said second group of boards.

According to some embodiments, T2 may be larger than 25mm. Preferably T2 is more than or equal to 40mm. More preferably T2 is more than or equal to 50mm. It may be even more than or equal to 60mm, however T2 being 50mm is preferred.

According to some embodiments, T1 is 20mm or 25mm and T2 is 50mm or 60mm.

According to some embodiments, the interfaces between interfacing boards may be secured by screws drilled from the face of one of the interfacing board, which face faces outwards the duct, into the side of the second of the interfacing boards.

Additionally to the glue used, holding means such as nails or screws and alike may be provided to increase the bond between the adjacent boards. The interfaces are as such more reliable secured.

According to some embodiments, the duct may be self-supporting. Self-supporting means that no other means are necessary to ensure the duct holds its position. Optionally however, other means may be provided to ensure the position and/or shape of the duct is secured.

According to some embodiments, the boards may provide the inner surface of the duct. No other duct-like tubular element is present within the perimeter specified by the boards of the duct according to the invention.

According to some embodiments, the duct is a fire rated duct.

According to a second aspect of the invention, a duct according to the first aspect of the invention is used as a part of a fire rated ductwork in a building.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

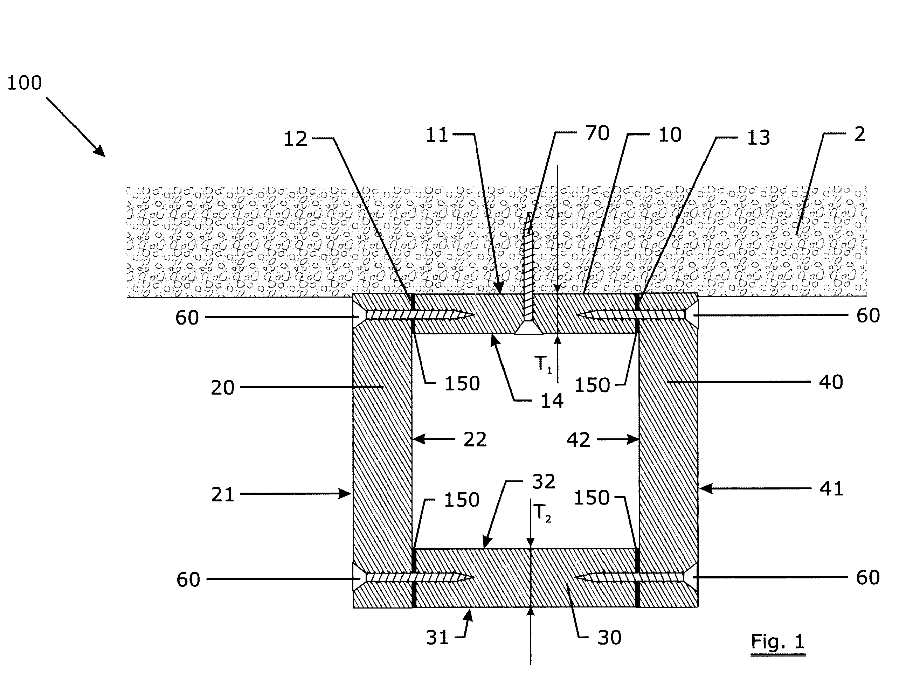

Fig. 1 to 4 are schematically views of radial cross sections of fire rated ducts according to the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.
Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

A duct 100 according to the invention, being a fire rated duct, is shown in figure 1. This duct 100 is four sided. This duct 100 has a substantially closed cross section and is mount to one construction wall 2. The first side of duct 100 contacts this construction walls 2 along its face 11. This side is provided by a board 10, this board 10 forming the first group of boards contacting the construction walls by one of its faces. The board 10 has a board thickness T1 of 20mm.
A second group of boards 20, 30 and 40 have faces not contacting the construction walls. The boards 20, 30 and 40 of this second group of boards having a board thickness T2 of 60mm.
At the interfaces where a board 10 is connected to a board of this second group of boards, i.e. at the interfaces between board 10 and board 20 and 40, the side 12 and 13 of this board 10 adheres at least by means of a fire resistant glue 150 to the face 22 and 42 of the board 20 and 40, which faces are facing inwards the duct 100. This glue is applied such that the interfaces where it is applied, are air tight coupled. Care is taken that as little as possible, and preferably no glue is caused to be present in the corners formed by sides 12 and 13 and faces 22 respectively 42. The interfaces between interfacing boards are secured by screws 60 drilled from the face 21 and 41, which face faces outwards the duct, into the side of the other interfacing boards.
The board 10 contacting the construction wall may be anchored to this walls by any appropriate means, in this embodiment screws 70.
The duct is self supporting and oriented in vertical direction, and in this embodiment, no supporting means are used.

Each side of the cross section of the duct 100 is provided by a calcium silicate board of type Promatect L500, available from Promat S.A.S..

Typical dimensions of these boards, next to the board thickness , are a length ranging between 1200mm and 3000mm, such as 1200mm (typically this length is used in axial direction of the duct) and a width ranging between 0mm and 2500mm, such as 1000mm.

The glue 150 used is Promacol S or Promacol K84/500, available from Promat S.A.S.

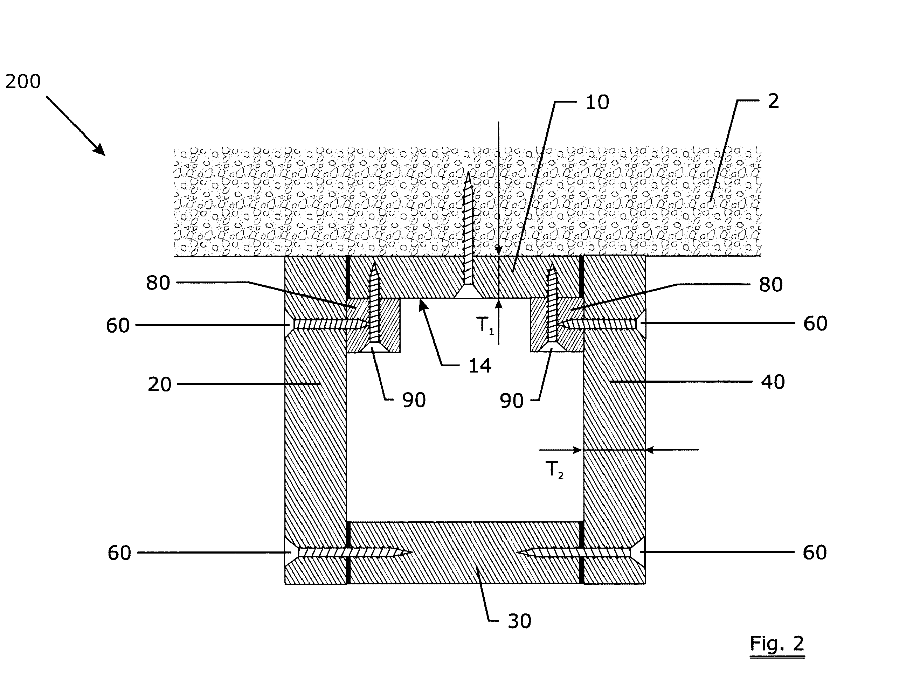

A substantially identical duct 200 according to the invention, substantially identical to duct 100, is shown in figure 2. Same references refer to identical means as in figure 1.
In duct 200, two additional calcium silicate support beams 80 are provided along the interface between the board 10 and the boards 20 and 40. The support beams are mount to the face 14 of board 10, which face faces inwards the duct 200 by means of screws 90. The screws 60 are screwed in the support beams 80, and not in the sides 12 and 14 of board 10. The dimensions of such beams are chosen such that the cross section of the beam is rectangular or square, having a minimum side dimension equal to T2.

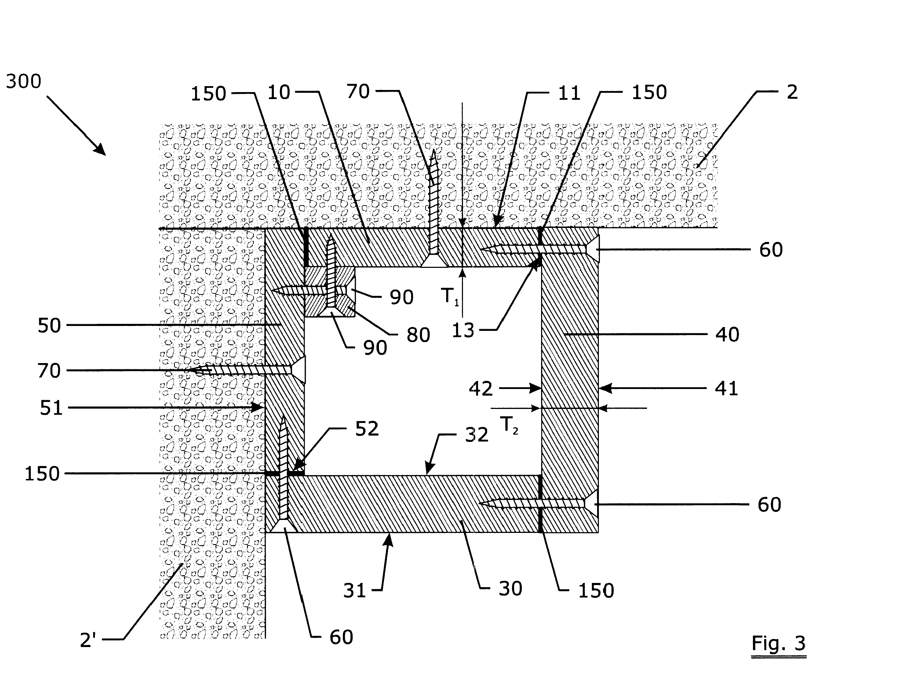

An other duct 300 according to the invention, being a fire rated duct, is shown in figure 3.
This duct 300 is four sided. This duct 300 has a substantially closed cross section and is mount to two construction walls 2 and 2', which walls for a corner. The first side of duct 300 contacts the construction walls 2 along its face 11. This side is provided by a board 10. The second side of duct 300 contacts the construction walls 2 along its face 51. This side is provided by a board 50. Boards 10 and 50 form the first group of boards contacting the construction walls by one of its faces. The boards 10 and 50 have a board thickness T1 of 20mm. A second group of boards 30 and 40 have faces not contacting the construction walls. The boards 30 and 40 of this second group of boards having a board thickness T2 of 60mm.

At interfaces between board 10 and board 40, and board 50 and board 30, the side 52 and 13 of these boards 10 and 50 adheres at least by means of a fire resistant glue 150 to the face 32 and 42 of the board 30 and 40, which faces are facing inwards the duct 300. This glue is applied such that the interfaces where it is applied, are air tight coupled. Care is taken that as little as possible, and preferably no glue is caused to be present in the corners formed by sides 52 and 13 and faces 32 respectively 42. The interfaces between interfacing boards are secured by screws 60 drilled from the face 31 and 41, which face faces outwards the duct, into the side of the other interfacing boards.
The boards 10 and 50 contacting the construction wall may be anchored to this walls by any appropriate means, in this embodiment screws 70.
The duct is self supporting and oriented in vertical direction, and in this embodiment, no supporting means are used.

Each side of the cross section of the duct 300 is provided by a calcium silicate board of type Promatect L500, available from Promat France.

The glue 150 used is Promacol S or Promacol K84/500, available from Promat S.A.S.

In duct 300, an additional calcium silicate support beam 80 is provided along the interface between the board 10 and the boards 50. The support beam is mounted identically as referred to in figure 2.

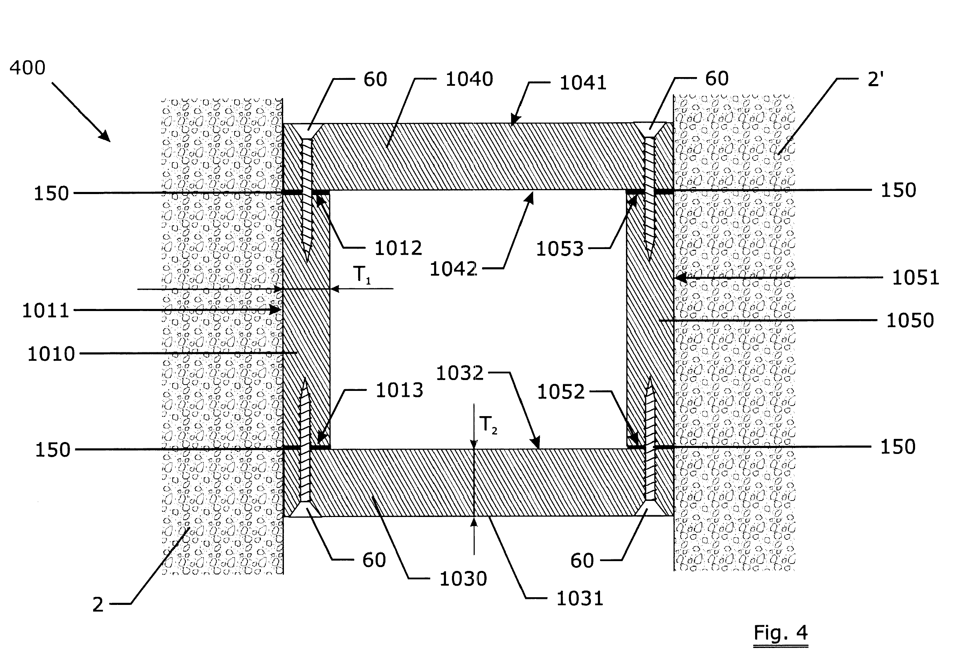

An other duct 400 according to the invention, being a fire rated duct, is shown in figure 4.
This duct 400 is four sided. This duct 400 has a substantially closed cross section and is mount to two construction walls 2 and 2'. The first side of duct 400 contacts the construction walls 2 along its face 1011. This side is provided by a board 1010. The second side of duct 400 contacts the construction walls 2' along its face 1051. This side is provided by a board 1050.

Boards 1010 and 1050 form the first group of boards contacting the construction walls by one of its faces. The boards 1010 and 1050 have a board thickness T1 of 20mm.
A second group of boards 1030 and 1040 have faces not contacting the construction walls. The boards 1030 and 1040 of this second group of boards having a board thickness T2 of 60mm.
At interfaces between boards 1010 and 1050, and boards 1030 and board 1040, the side 1012, 1013 and 1052 and 1053 of these boards 1010 and 1050 adheres at least by means of a fire resistant glue 150 to the face 1032 and 1042 of the board 1030 and 1040, which faces are facing inwards the duct 400. This glue is applied such that the interfaces where it is applied, are air tight coupled. Care is taken that as little as possible, and preferably no glue is caused to be present in the corners formed by the contacting boards. The interfaces between interfacing boards are secured by screws 60 drilled from the face 1031 and 1041, which face faces outwards the duct, into the side of the other interfacing boards.

Each side of the cross section of the duct 400 is provided by a calcium silicate board of type Promatect L500, available from Promat France.
The glue 150 used is Promacol S or Promacol K84/500, available from Promat S.A.S.

Alternatives for the embodiments described in view of figures 1 to 4, are ducts where the calcium silicate boards contacting the construction wall have a thickness T1 of 25mm. Embodiments comprising boards contacting the construction wall having a thickness T1 of 20mm or 25mm most preferably are provided with calcium silicate support beam.

It is understood that even further alternatives are ducts where the group of boards having faces not contacting the construction walls, have a board thickness T2 of 50mm or 40mm.

It is to be understood that although preferred embodiments and/or materials have been discussed for providing embodiments according to the present invention, various modifications or changes may be made without departing from the scope and spirit of this invention.

## Claims

1. A duct having a four sided substantially closed cross section, said duct being mount to one of more construction walls, one or two sides of said duct contacting said one or more construction walls, each side of said cross section being provided by a calcium silicate board, a first group of boards contacting said one or more construction walls by a face of said boards, the boards of this first group of boards having a board thickness T1, a second group of boards have faces not contacting said one or more construction walls, the boards of this second group of boards having a board thickness T2, T1 being smaller than T2, T1 being more than or equal to 20mm, at the interfaces where a board of said first group of boards is connected to a board of said second group of boards, a side of said board of said first group of boards adheres at least by means of a glue to the face of the board of said second group of boards, which face is facing inwards the duct.

2. A duct according to claim 1, wherein T2 is larger than 25mm.

3. A duct according to any one of the preceding claims, wherein T1 is more than or equal to 25mm.

4. A duct according to any one of the preceding claims, wherein the glue is only present in the duct at the interfaces of the boards.

5. A duct according to any one of the preceding claims, wherein only one side of said duct contacting one or more construction walls.

6. A duct according to any one of the claims 1 to 4, wherein two sides of said duct contacting one or more construction walls.

7. A duct according to claim 6, wherein one or more additional calcium silicate support beams are provided at the interface between two boards of said first group of boards.

8. A duct according to any one of the preceding claims, wherein one or more additional calcium silicate support beams are provided along the interface between the boards of said first group of boards and the boards of said second group of boards

9. A duct according to any one of the preceding claims, wherein T2 is more than or equal to 40mm.

10. A duct according to any one of the preceding claims, wherein T1 is 20mm or 25mm and T2 is 50mm or 60mm.

11. A duct according to any one of the preceding claims, wherein the interfaces between interfacing boards are secured by screws drilled from the face of one of the interfacing board, which face faces outwards the duct, into the side of the second of the interfacing boards.

12. A duct according to any one of the preceding claims, said duct is self-supporting.

13. A duct according to any one of the preceding claims, wherein the boards provide the inner surface of the duct.

14. A duct according to any one of the preceding claims, wherein the duct is a fire rated duct.

15. the use of a duct according to any one of the preceding claims as a part of a fire rated ductwork in a building.
